# EUROPEAN PATENT APPLICATION

(11) **EP 3 540 000 A1**
(43) Date of publication of application: **18.09.2019**
(21) Application number: 18162392.7
(22) Date of filing: 16.03.2018
(51) Int. Cl.: C08J 3/22, D01F 6/60, D01F 8/12

(54) **FLAME RETARDANT POLYAMIDE 6 MASTER BATCH AND FIBERS MADE THEREOF**

(71) Applicant: Stutz, Felix Benjamin, 6644 Orselina (CH)
(72) Inventor: STUTZ, Felix Benjamin, 6644 Orselina (CH); GAAN, Sabyasachi, 9200 Gossau (CH); HUFENUS, Rudolf, 9014 St. Gallen (CH)
(74) Representative: Schmauder & Partner AG Patent- & Markenanwälte VSP

(57) **Abstract**

A novel flame-retardant polymer master batch comprises an admixture of 8 to 70 wt.% of a flame retardant consisting of 6-(hydroxymethyl)dibenzo[c,e][1,2]oxaphosphinine 6-oxide with the remainder essentially consisting of a base polymer selected from polyamide 6 and a polyamide-6-compatible polymer. A method of producing such master batch comprises the steps of supplying appropriate amounts of the base polymer in granular form and of the flame retardant in powder form to a compounding extruder followed by melt compounding at a temperature of 200 to 260°C and granulation to form said master batch in granular form. A method of producing a plastic product with flame retardant properties, comprises the steps of either (a) melt processing a master batch according to the invention, or (b) melt processing appropriate amounts of base polymer in granular form and of flame retardant in granular form. A plastic product with flame retardant properties obtainable with such method comprises at least one region formed of said base polymer containing an admixture of 8 to 40 wt.% of said flame retardant.

## Description

### FIELD OF THE INVENTION

The present invention generally relates to a flame-retardant polymer master batch and to a method of producing the same. Moreover, the invention relates to a method of producing a product with flame retardant properties, and to such a product.

### BACKGROUND OF THE INVENTION

Fibers of polyamide 6 (henceforth abbreviated as "PA6") are preferred fibers in technical applications where high mechanical strength (high tenacity and elongation at break) is needed. The PA6 polymer being aliphatic, it is very flammable and produces a large amount of toxic gases like HCN and CO. Therefore, a suitable flame-retardant modification of PA6 fibers is needed for fire safe application.

There are several ways to prepare flame retardant PA6 fibers and textiles thereof. Polyamide based textiles can be made flame retardant by a coating process wherein the flame retardant is applied to the surface by chemical crosslinking [1] or via a grafting process [2]. However, in both above mentioned cases a limited or even lacking durability of the finishing treatment under commercial and home laundry processes has been found. The handling of the fabric was also not evaluated and it is expected to be altered with such high concentrations of flame retardant additives on its surface. The polyamides can be flame retarded by incorporating halogenated flame retardants, however their use is not preferred due to toxicity and environmental reasons [3,4]. Flame retardant PA6 fibers can also be prepared by incorporating meltable [5] and non-meltable halogen free additives [6] or combination of both kinds of additives [7] in the fiber spinning process. Textiles produced from these fibers have shown to have excellent flame-retardant behavior; however, they have very poor mechanical properties. In some cases, only small lab scale trials were performed without any industrial upscaling or feasibility study. Non meltable additives like melamine cyanurate [8] and clays [9] have also been used to prepare flame retardant PA6 fibers. The actual manufacturing process for producing these flame-retardant fibers is quite complex (cleaning after *in situ* polymerization) and such fibers have inferior mechanical properties and are thus not suitable for industrial applications.

The use of additives that are meltable and thermally stable under processing conditions of the polymer for producing functional fibers avoids potential problems related to processing such as agglomeration and clogging of spinneret holes. Compatibility with the intended polymer matrix is a further important property in view of the production of fibers with adequate mechanical properties. DOPO based compounds are established as flame retardant additives for high temperature polyesters because of their excellent thermal stability [10].

DOPO derivatives with varying thermal stabilities and compatibility in PA6 are known in the literature. However, there is limited reference or no reference on the use DOPO-derivatives to produce flame retardant PA6 fibers via the melt spinning route. Some DOPO derivatives have been shown to be suitable for PA6 engineering plastics [10], but their use for making PA6 fibers has not been reported.

### SUMMARY OF THE INVENTION

In view of the above, it is an object of the present invention to provide new and improved means of achieving good flame-retardant properties for melt processed polyamide 6.

Therefore, according to one aspect of the invention, there is provided a flame retardant polymer master batch which comprises an admixture of 8 to 70 wt.% of a flame retardant consisting of 6-(hydroxymethyl)dibenzo[c,e][1,2]oxaphosphinine 6-oxide, with the remainder essentially consisting of a base polymer selected from polyamide 6 and a polyamide-6-compatible polymer.

Typically, the master batch is in a granular form. As customary in plastics industry, the term "granular form" generally denotes a non-powdery form consisting of particles shaped as chips, flakes, pellets or granules and having a size of the order of a few mm, typically about 2 to 8 mm.

The term "master batch" shall be understood in a broad sense meaning that the master batch is suitable for use in a melt compounding process with predefined amounts of (i) a main polymeric species, which is often a neat or "virgin" polymer, and (ii) of the master batch. However, this terminology does not exclude suitability of the master batch for direct melt processing.

In the present context, the expression "essentially consisting of a base polymer" shall be understood as equivalent to "consisting of a base polymer plus any impurities and other substances that are inevitably present in the base polymer".

The term "polyamide-6-compatible polymer" shall be understood as a polymer that can be melt processed together with polyamide 6 without adverse effect on thermomechanical properties.

The above-mentioned flame retardant, which will henceforth be abbreviated as "HMDOPO", has the following structure: 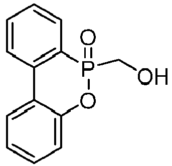 6-(hydroxymethyl)dibenzo[c,e][1,2]oxaphosphinine 6-oxide (HMDOPO)

HMDOPO is known in the literature as flame retardant for various polymers [11-49] but has never been described to produce PA6 master batch and/or PA 6 fibers made thereof. The use of HMDOPO as a reactive flame retardant for epoxy and other polymers has been reported in the literature [11-48]. Few reports also outline its possible use in PET fibers as flame retardant additive [41,49]. However, there is no report of use of HMDOPO as flame retardant additive for melt-spun PA 6 fibers. HMDOPO has a melting point ∼170 °C and a decomposition temperature slightly greater than 200 °C, and it is likely that it starts to volatilize above this temperature. Considering such low decomposition temperature of HMDOPO, it would not be expected to be suitable for high temperature polymer processing (>200 °C).

Surprisingly, it has been found that HMDOPO is compatible with PA6 processing. This finding was particularly unexpected in view of the presence of a reactive hydroxyl group. As will be discussed further below, fibers with satisfactory mechanical performance were produced even when spun with 30 wt.% HMDOPO. An admixture of 5-10 wt. % HMDOPO in the fiber is sufficient to achieve excellent flame retardancy with a good balance of mechanical properties.

According to another aspect of the invention, a method of producing a master batch as defined above comprises the steps of supplying appropriate amounts of the base polymer in granular form and of said flame retardant in powder form to a compounding extruder followed by melt compounding at a temperature of 200 to 260°C and granulation to form said master batch in granular form. As will be known to the skilled person, some care needs to be taken when compounding a granular component together with a powder component, particularly in order to avoid undesirable agglomeration of the powdery component.

According to a further aspect of the invention, a method of producing a product with flame retardant properties comprises the steps of either
(a) melt processing a master batch as defined above, or
(b) melt processing appropriate amounts of base polymer in granular form and of flame retardant in granular form.

The above method exploits the main finding of the present invention, i.e. the favorable flame-retardant effect obtainable by incorporating HMDOPO into PA6. In practice the method can be carried out according to option (a), which means directly melt processing a master batch, preferably in granular form, comprising 8 to 70 wt.% HMDOPO with the remainder essentially consisting of base polymer. Alternatively, the method can be carried out according to option (b), in which case virgin base polymer (i.e. base polymer without flame retardant) in granular form and flame retardant in neat granular form (i.e. without base polymer) are melt processed together.

It has been found that an admixuture of at least about 8 wt.% HMDOPO is required to achieve a significant flame-retardant effect. Therefore, when using option (a) above, one can either melt process only master batch having the desired HMDOPO content or else one can melt process a master batch with a higher HMDOPO content, typically introduced via a so-called "side feeder", together with an appropriate amount of virgin base polymer, typically introduced via a so-called "main feeder". Considering that in many melt compounding devices the side feeder(s) can only provide up to 8 to 14% of the total input, this means using a master batch with a correspondingly high admixture of HMDOPO. This is why option (b) may be preferable, because it does not require production of a master batch with very high HMDOPO content.

According to yet another aspect of the invention, a product with flame retardant properties obtainable with the above defined method comprises at least one region formed of said base polymer containing an admixture of 8 to 40 wt.%, particularly 15 to 30 wt.%, of said flame retardant.

Advantageous embodiments are defined in the dependent claims and in the detailed description further below.

The relative amount of the flame-retardant admixture can be selected in broad range and will generally depend on how the master batch is used further. According to one embodiment (claim 2), the admixture is 10 to 50 wt.%, particularly 10 to 40 wt.%, more particularly 15 to 30 wt.%.

According to a further embodiment (claim 3), the base polymer is polyamide 6. Advantageously, the base polymer has a comparatively high relative viscosity, which improves stability after addition of the flame retardant. Therefore, according to one embodiment, the relative viscosity is at least about 2.7. In this context, the term "about 2.7" shall be understood as "in the range of 2.6 to 2.8", which is a typical range specified for commercially available polyamide 6 with a nominal relative viscosity of 2.7 according to ISO 307. It is contemplated to use even higher viscosities particularly in the case of comparatively large flame-retardant admixtures of 50 wt.% or more.

According to an advantageous embodiment (claim 7) of the method of producing a product with flame retardant properties, a step (a) of melt processing a master batch is carried out using a granular mixture of the master batch and a further polymer that is compatible with the base polymer. The term "granular mixture" shall be understood to mean that both the base polymer and the further polymer are supplied in granular form.

According to another embodiment (claims 8 and 14), the product being formed is a film, membrane or solid body, whereas according to a further embodiment (claim 9) the product is a melt spun fiber.

According to one embodiment (claim 10), the product being formed is a melt spun fiber comprising a core section and a sheath section, the sheath section being formed of the base polymer and an admixture of 10 to 40 wt.%, particularly 15 to 30 wt.% of the flame retardant, and the core section being formed of a further polymer compatible with the base polymer. Advantageously (claim 11), the base polymer is polyamide 6 with a relative viscosity of at least about 2.7 and the further polymer is polyamide 6 with a relative viscosity of about 2.4, i.e. in the range of 2.3 to 2.5.

According to a further embodiment (claim 12), the method further comprises the step of making a textile from said melt spun fiber. In particular (claim 15), the textile has flame retardant properties characterized by a limiting oxygen index of at least 25%, preferably at least 30%. As generally known (see e.g. the entry "limiting oxygen index" in Wikipedia), the limiting oxygen index (LOI) is the minimum concentration of oxygen, expressed as a percentage, that will support combustion of a polymer. Noting that air has an oxygen content of about 21%, any LOI values that are higher than 21% are indicative of a flame-retardant effect. In practice, LOI values for different plastics materials are determined by standardized tests such as the ISO 4589 and ASTM D2863 tests.

### BRIEF DESCRIPTION OF THE DRAWING

The above mentioned and other features and objects of this invention and the manner of achieving them will become more apparent and this invention itself will be better understood by reference to the following description of various embodiments of this invention taken in conjunction with the accompanying drawing, wherein:

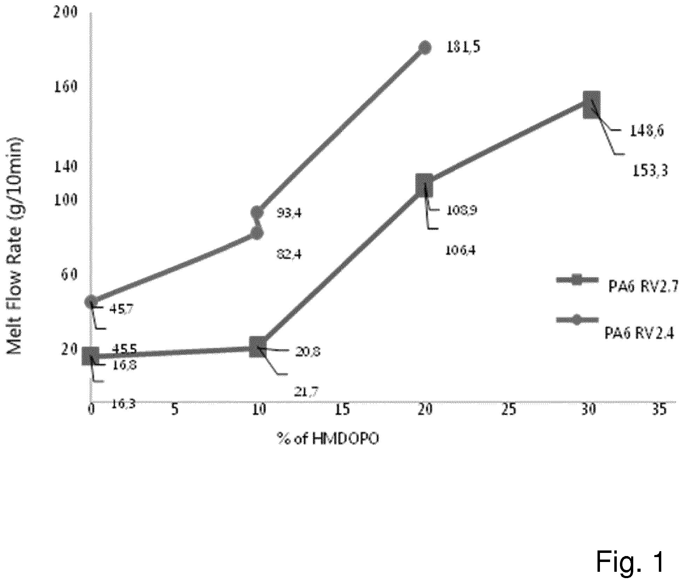

- Fig. 1: shows a diagram of the melt flow ratio obtained for the master batch using PA6 RV2.4 (circles, blue curve) and PA6 RV2.7 (squares, red curve) as a function of HMDOPO concentration expressed in wt.%.

### DETAILED DESCRIPTION OF THE INVENTION

### Master batch preparation

The master batch/ compound production was performed using a polyamide 6 with a relative viscosity of 2,7 and HMDOPO. For the compounding trials, twin screw compounding lines with 21 mm, 25 L/D (MB No. 1-3), and 16 mm, 36 L/D (MB No. 4), respectively, were used. The screw configuration was set up to obtain a homogeneous compound. Chaotic mixing elements were used on the screw configuration allowing the use of lower temperatures, pressure and torque. The following were the processing conditions for manufacturing the master batch.

**Table 1: Compounding process conditions at extruder**

| **Master-batch No.** | PA6 : HMDOPO (w/w) | **Extruder Sections Temperatures** | | | | | **Screw Speed (RPM)** | Screw Torque (%) | Pressure at die (Bar) |
|---|---|---|---|---|---|---|---|---|---|
| | | **1** | **2** | **3** | **4** | **die** | | | |
| 1 | 90:10 | 225 | 220 | 215 | 215 | 200 | 2 | 9 | 3 |
| 2 | 80:20 | | | | | | | 6 | 2 |
| 3 | 70:30 | | | | | | | 5 | 1 |
| 4 | 50:50 | 260 | 260 | 240 | 225 | 220 | 75 | 2 | - |

In the case of master batches 1-3, it is visible that the increase of FR additive in the process reduces screw torque and the pressure at die, indicating a melt flow increase. Despite the described viscosity variation, all the compounds were successfully produced in a stable process. A polyamide 6 with relative viscosity of 2.4 was initially used. In a second set of trials was used a polyamide 6 with relative viscosity of 2.7. Using a polyamide with relative viscosity of 2.7 (RV 2.7) the compounding process was more stable when compared with the process using polyamide RV 2.4. This difference is more evident for higher amounts of additive. Using a PA6 RV 2.7 it was possible to achieve 40% additive concentration; however, the process becomes instable, showing a behavior similar to the observed when processing 30 % of additive using PA6 RV 2.4. As conclusion, it is possible to say that the use a PA6 RV 2.7 allows to introduce 10% more additive into the compounding than using PA6 RV2.4. With a stable process was possible to reach 30% of FR additive. Pa6 with higher relative viscosity (greater than 2.7) may be suitable to produce master batch with higher additive HMDOPO concentration (>40%).

By using a side feeder on another twin-screw compounding line (16 mm, 36 L/D), a master batch with 50% HMDOPO concentration (master batch no. 4) could be produced in a stable process (PA6 with RV 2.6).

### Characterization of the master batch

Melt flow index (MFI) tests were carried out to deduce the material behavior during the spinning trials. As reference values between 10 g/10min and 50 g/10min (under a 2,16 kg load) should be obtained for a stable spinning process. These values are only indicative, since they are based in stable processes previously achieved using materials with melt flows rate out of this range. Others parameters, such as melt strength, should be taken in account. However, considering this test, its observations, and the observations from previous compounding step, it will be possible to deduce about the relevance of performing a melt spinning trial using the master batch with a higher amount of FR additive. The MFI tests were performed using a load of 2,16 kg at 230 °C. All the samples were previous dried 4 hours at 80°C. In the next plot the results of the flow index for the compounds produced using a polyamide 6 with a relative viscosity of 2.4 and 2.7 are shown in Fig. 1. As expected, the higher the amount of additive the higher is the melt flow rate (MFR). Using a PA6 with a relative viscosity of 2.4, due to the quick material flow, in the tested conditions, it was impossible to acquire data for the 30% compound. The master batch obtained from PA6 with a relative viscosity of 2.7, as expected, shows lower MFR values when compared with the PA6 RV 2.4.

DSC data of the master batch were obtained as per the standards ISO 11357-1:1997 Plastics - Differential scanning calorimetry (DSC) - Part 1: General principles" and ISO 11357-2:1999 "Plastics - Differential scanning calorimetry (DSC) - Part 2: Determination of glass transition temperature". The data for respective PA6 (different viscosity) are presented in the tables given below:

**Table 2: DSC data for master batch obtained from PA6 with relative viscosity of 2.4.**

| | 1^{st} heating | | Cooling | | 2^{nd} heating | |
|---|---|---|---|---|---|---|
| Amount of HMDOPO (%) | PA6(2,4) Tm (°C) 1st heating | PA6(2,4) ΔH (J/g) 1st heating | PA6(2,4) Tc (°C) (cooling) | PA6(2,4) ΔH (J/g) (cooling) | PA6(2,4) Tm (°C) 2nd heating | PA6(2,4) ΔH (J/g) 2nd heating |
| 0 | 228 | 74,8 | 165 | - | 227 | 56,3 |
| 1 | 221 | 61,2 | 181 | - | 218 | 56,4 |
| 2 | 217 | 65,1 | 177 | - | 216 | 55,9 |
| 3 | 214 | 50,1 | 168 | - | 209 | 38,6 |

**Table 3: DSC data for master batch obtained from PA6 with relative viscosity of 2.7.**

| | 1st heating | | Cool | | 2nd heating | |
|---|---|---|---|---|---|---|
| Amount of HMDOPO (%) | PA6(2,7) Tm (°C) 1st heating | PA6(2,7) ΔH (J/g) 1st heating | PA6(2,7) Tc (°C) (cooling) | PA6(2,7) ΔH (J/g) (cooling) | PA6(2,7) Tm (°C) 2nd heating | PA6(2,7) ΔH (J/g) 2nd heating |
| 0 | 228 | 66,5 | 17 | -61,7 | 226 | 54,7 |
| 10 | 230 | 65,3 | 18 | -68,1 | 227 | 51,4 |
| 20 | 219 | 64,9 | 18 | -43,8 | 215 | 44,2 |
| 30 | 213 | 54,7 | 16 | -49,1 | 206 | 43,0 |
| 40 | 209 | 45,1 | 15 | -38,3 | 199 | 27,4 |

The transition temperatures and the enthalpy show no significant impact between the two used different grades of polyamide 6. Both grades roughly show the same behavior with the increment of HMDOPO.

### Fiber Production

### Mono-component fiber spinning (5-10% HMDOPO content)

Fiber spinning with varying concentration (5-10%) of HMDOPO was performed as per the conditions as shown in the table given below.

**Table 4: Mono-component fiber spinning conditions**

| **Fibre** | | **1** | **2** | **3** | **4** | **5** | **6** | **7** |
|---|---|---|---|---|---|---|---|---|
| **Description** | | **Control (PA6)** | **PA6+5 %FR compound** | **PA6+6%FR compound** | **PA6+7 %FR compound** | **PA6+8%FR compound** | **PA6+9 %FR compound** | **PA6+10%FR compound** |
| **Extruder Temperatures (°C)** | **Feed** | 54,7 | | | | | | |
| | **Zone 1** | 211,0 | | | | | | |
| | **Zone 2** | 219,6 | | | | | | |
| | **Zone 3** | 225,2 | | | | | | |
| | **Zone 4** | 230,8 | | | | | | |
| | **Melt Pump** | 234,8 | | | | | | |
| | **Melt** | 222,4 | | | | | | |
| | **Pipe line** | 224,8 | | | | | | |
| **Spinneret Temperature (°C)** | | 214.2 | | | | | | |
| **Material Throughput (cm³/min)** | | 30,37 | | | | | | |
| **Spinneret Pressure (bar)** | | 87 | 65 | 56 | 29 | 27 | 22 | 23 |
| **Godets speed (m/min)** | **1** | 500 | | | | | | |
| | **2** | 1500 | | | | | | |
| | **3** | | | | | | | |
| **Draw Ratio** | | 3,0 | | | | | | |
| **Godets Temp (°C)** | **1** | 63 | | | | | | |
| | **2** | 45 | | | | | | |
| | **3** | 33 | | | | | | |

In addition, fiber melt-spinning of PA6 with direct dosing of pure HMDOPO powder in a concentration of 5% (with respect to PA6) was performed as shown in the table below.

**Table 5: Mono-component fiber spinning conditions with direct dosing of the FR**

| Fiber No. | Zone 1-3 temp. [°C] | Melt pump temp. [°C] | Spinneret temp. [°C] | Throughput [cm³/min] | Spinneret pressure [bar] | Godets speed [m/min] | Draw ratio | Godets temp. [°C] |
|---|---|---|---|---|---|---|---|---|
| 8 | 220 | 220 | 220 | 3,6 | 19 | 300/1190/1200 | 4,0 | 55/80/50 |

### FR additive: HMDOPO

The following table presents the mechanical properties of the fibers produced as per the process described earlier.

**Table 6: Mechanical properties of fiber 1-8 produced as per Tables 4 and 5**

| Fiber Type and HMDOPO content (%) | Draw Ratio | Count (dtex) | Elongation at rupture | | Tenacity | |
|---|---|---|---|---|---|---|
| | | | **%** | **σ** | **cN/dtex** | **σ** |
| 1 (0%) | 3,0 | 213 | 42,5 | 9,4 | 3,7 | 0,3 |
| 2 (5%) | | 208 | 46,2 | 3,3 | 3,8 | 0,1 |
| 3 (6%) | | 211 | 46,2 | 24,6 | 2,8 | 1,5 |
| 4 (7%) | | 209 | 57,8 | 9,8 | 3,2 | 0,3 |
| 5 (8%) | | 212 | 62,2 | 7,1 | 2,8 | 0,2 |
| 6 (9%) | | 210 | 72,5 | 2,7 | 2,8 | 0,1 |
| 7 (10%) | | 210 | 63,3 | 6,1 | 2,6 | 0,2 |
| 8 (5%) | 4,0 | 36.5 | 19,7 | 1,9 | 3,5 | 0,1 |

### Bicomponent fiber spinning (15 and 30% HMDOPO content)

The fiber production was conducted using virgin PA6 and the master batch (PA6 - 2.7 viscosity with 30 % of HMDOPO additive). An initial approach of bi-component fiber with a sheath-core geometry was followed. The FR compound was placed in the sheath side (extruder A, with a pump capacity of 0.6 cc/rot) and its final percentage in the fibers was controlled by the direct mixture of pellets of the 30% FR compound and virgin PA6 (with relative viscosity of 2.7). Additionally, a virgin PA6 with relative viscosity of 2.4 was used in the core (extruder C, with a pump capacity of 2.9cc/rot) in order to improve process stability while ensuring similar melt flow rates of the different materials throughout the spinneret. Initially several ratios of sheath/core were tested, with different ratios of PA6/PA6FR, throughputs and temperatures trying to achieve a stable spinning process. Finally, fibers were produced using FR additive in 15% and 30%. A stable process was achieved for a ratio of sheath/core of 95/5. The processing conditions used to produce the different fibers are presented in table shown below.

**Table 7: Fiber spinning conditions for bi-component fibers**

| **Fibre** | | **1** | **2** | **3** | **4** |
|---|---|---|---|---|---|
| **Description** | | **Control (PA6)** | **15 % FR compound** | **15 % FR compound** | **30 % FR compound** |
| **Extruder A Temperatures (°C)** | **Feed** | 17.7 | 17.7 | | |
| | **Zone 1** | 206.8 | 196.6 | | |
| | **Zone 2** | 229.2 | 201.4 | | |
| | **Zone 3** | 232.6 | 214.0 | | |
| | **Melt Pump** | 233 | 214.9 | | |
| | **Melt** | 228.2 | 217.4 | | |
| | **Pipe line** | 225.4 | 210.7 | | |
| **Extruder C Temperatures (°C)** | **Feed** | 18.7 | 18.8 | | |
| | **Zone 1** | 230.6 | 252.4 | | |
| | **Zone 2** | 234.5 | 240.8 | | |
| | **Zone 3** | 235.9 | 244.8 | | |
| | **Zone 4** | 229.9 | 237.6 | | |
| | **Melt Pump** | 244.1 | 234.7 | | |
| | **Melt** | 224 | 216.3 | | |
| | **Pipe line** | 239.7 | 235.1 | | |
| **Spinneret Temperatrure (°C)** | | 237.5 | 218.2 | | |
| **Material Throuchpt (cm³/min)** | **A** | 7.2 | 28.8 | | |
| | **c** | 14.6 | 1.5 | | |
| **Spinneret Pressure (bar)** | **A** | 54 | 93 | 93 | 69 |
| | **c** | 101 | 87 | 88 | 72 |
| **Godets speed (m/min)** | **1** | 420 | 420 | 555 | 555 |
| | **2** | 1300 | 1300 | 1810 | 1310 |
| | **3** | | | | 1284 |
| **Draw Ratio** | | 3.1 | | 3.3 | 2.4 |
| **Godets Temp (°C)** | **1** | 66 | | | |
| | **2** | 45 | | | |
| | **3** | 23 | | | |

### FR additive: HMDOPO

The fibers 1-4 thus produced as per the conditioned mentioned above had mechanical properties as shown in table below:

**Table 8: Mechanical properties of fibers 1-4 produced as described in Table 7**

| Fiber | Draw Ratio | Count | Elongation at rupture | | Tenacity | |
|---|---|---|---|---|---|---|
| | | dtex | % | σ | cN/dtex | σ |
| 1 | 3.1 | 140 | 56.9 | 3.1 | 3.98 | 0.12 |
| 2 | 3.1 | 230 | 54.7 | 8.0 | 3.25 | 0.32 |
| 3 | 3.3 | 166 | 34.4 | 4.1 | 3.73 | 0.17 |
| 4 | 2.4 | 252 | 31.8 | 4.6 | 1.36 | 0.04 |

### Fire tests results

The fibers thus produced were converted into knitted fabric in a laboratory scale circular loom from Sodemat. The fire tests on the fabrics were conducted in accordance to a method based on ISO 3795, which consists of placing a flame at 2cm of the sample (in the middle) during 2 second, remove the flame and wait until the fire extinguishes. The time till the fire extinguishes (no flame spread) from the start of the test was recorded for each specimen. The blank fabric without HMDOPO had a time of burning of 25 sec. Significant flame retardancy was observed for fabrics with HMDOPO concentration greater than 8 %. In this case the time till the fire extinguishes was less than 7 secs, clearly demonstrating the flame-retardant efficacy of the HMDOPO containing fibers.

The limiting oxygen index (LOI) values of the Fabrics made from PA6 Fibers with 10 % HMDOPO is 30% and that for blank PA6 fabric is 24%.

### References

1. Yang, H.; Yang, C.Q. Durable flame-retardant finishing of the nylon/cotton blend fabric using a hydroxyl-functional organophosphorus oligomer. Polym. Degrad. Stab. 2005, 88, 363-370.
2. Liu, W.; Zhang, S.; Bourbigot, S.; Sun, J.; Yu, L.; Feng, Q.; Chen, X.; Zhu, X. Burning behavior and thermal degradation kinetics of surface photografted polyamide 6.6 fabric. Polym. Adv. Technol. 2012, 23, 1550-1554.
3. Levchik, S.V.; Weil, E.D. Combustion and fire retardancy of aliphatic nylons. Polymer International 2000, 49, 1033-1073.
4. Weil, E.D.; Levchik, S. Current practice and recent commercial developments in flame retardancy of polyamides. Journal of Fire Sciences 2004, 22, 251-264.
5. Coquelle, M.; Duquesne, S.; Casetta, M.; Sun, J.; Zhang, S.; Bourbigot, S. Investigation of the decomposition pathway of polyamide 6/ammonium sulfamate fibers. Polym. Degrad. Stab. 2014, 106, 150-157.
6. Lin, Y.; Sha, K.; Xu, H.; Tang, Y.; Xiao, R. Preparation of flame retardant polyamide 6 fibers with melamine cyanurate and bicyclic phosphates via melt spinning. Adv. Mater. Res. (Durnten-Zurich, Switz.) 2013, 621, 44-47, 45 pp.
7. Coquelle, M.; Duquesne, S.; Casetta, M.; Sun, J.; Gu, X.; Zhang, S.; Bourbigot, S. Flame retardancy of pa6 using a guanidine sulfamate/melamine polyphosphate mixture. Polymers 2015, 7, 316.
8. Li, Y.; Lin, Y.; Sha, K.; Xiao, R. Preparation and characterizations of flame retardant melamine cyanurate/polyamide 6 composite fibers via in situ polymerization. Text. Res. J. 2017, 87, 561-569.
9. Monti, M.; Tsampas, S.A.; Fernberg, S.P.; Blomqvist, P.; Cuttica, F.; Fina, A.; Camino, G. Fire reaction of nanoclay-doped PA6 composites reinforced with continuous glass fibers and produced by commingling technique. Polym. Degrad. Stab. 2015, 121, 1-10
10. Salmeia, K.A.; Gaan, S. An overview of some recent advances in dopo-derivatives: Chemistry and flame retardant applications. Polym. Degrad. Stab. 2015, 773, 119-134; Saito, T. Biphenylylene phosphonochloridites. DE2034887A, 1972.
11. Izawa, S.; Saito, T. Fire-resistant polycarbonate compositions. JP53005248A, 1978.
12. Izawa, S.; Sugiyama, J.; Tanaka, T.; Nakanishi, A.; Saito, T. Flame-resistant polyoxyphenylene. DE2730345A1, 1978.
13. Saito, T.; Kitani, M.; Mori, K.; Izawa, S. Organophosphorus compounds. DE2730371A1, 1978.
14. Yamamoto, Y.; Okasaka, H.; Morikawa, M. Polyester resin compositions. JP54145754A, 1979.
15. Image recording sets. JP56056899A, 1981.
16. Isobe, K.; Tenokuchi, K. (meth)acrylate esters, their manufacture, curable resin compositions, and cured products. JP07048394A, 1995.
17. Mori, K.; Saito, T. Preparation of organophosphorus compounds and flame retardants for organic compounds. JP07053582A, 1995.
18. Fukuoka, T.; Hoda, H. Organophosphorous color developer and thermal recording material using it. JP10278436A, 1998.
19. Mori, K. Cyclic organophosphorus compounds, their manufacture and use as flame retardants for polymers. JP10114783A, 1998.
20. Fujibuchi, T.; Sasai, S. Fire-resistant epoxy resin powder coating compositions containing phosphorus compounds. JP2000336305A, 2000.
21. Saito, T.; Hirayama, T.; Sumitomo, H. Phoshporous-containing flame retardant epoxy resins. JP2000154234A,2000.
22. Wang, C.S.; Shieh, J.Y. Phosphorus-containing crosslinking agents and flame-retardant hardened epoxy resins thereof. JP2001220427A, 2001.
23. Huang, K.; Chen, H.; Du, A.; Zhao, H. Fire-resistant phenolic epoxy resins having dihydrooxaphosphaphenanthrene oxide groups on their side chains and fire-resistant resin compositions containing the same. CN1339538A, 2002.
24. Kinoshita, H.; Makino, T.; Yamashita, T.; Midori, K.; Ikemoto, K.; Sumitomo, H. Phosphorus-based fireproofing agent for polyester fiber with good durability. JP2002275473A, 2002.
25. Wang, C.S.; Hsieh, C.Y.; Lin, C.Y. Phosphorus-containing fire-resistant curing agents and epoxy resins, advanced epoxy resins, and cured epoxy resins containing them. JP2003105058A, 2003.
26. Bauer, M. Use of hydroxyl-groups containing phosphinates as flame retardant and in the preparation of flame retardants that can be used to be built into polymer resins, the phosphinates containing organic groups that can be polymerized prepared in this way as well as the flame-retardant polymer resins. EP1544227A1, 2005.
27. Bauer, M.; Just, B. Prepolymers containing phosphororganic compounds and fire-resistant uses thereof. US20060223921A1, 2006.
28. Wang, C.S.; Shieh, J.Y.; Lin, C.Y.; Hsieh, W.J. Fire-resistant phosphorus-containing cured benzoxazine resins and preparation thereof. US20060149023A1, 2006.
29. Jung, G.C.; Cho, H.N.; Park, I.G.; Yoo, J.H.; Hyun, A.R.; Jung, Y.H. Phosphaphenanthrenebased organic light-emitting compound and organic electroluminescent element using the compound. KR2008091036A, 2008.
30. Kurihashi, T.; Ogi, S.; Oshimi, K. Thermosetting resin compositions containing fireproofing compounds, their curing, and multilayer materials with cured layers of the same. JP2010254906A, 2010.
31. Zheng, Y.; Yan, L.; Zheng, N. Polyphosphonate flame retardant containing dopo side chain structure and its preparation method. CN101838538A, 2010.
32. Liu, S.; Zhao, J.; Chen, J. Fire-resistant latent epoxy curing agent and its halogen-free fire-resistant one-component epoxy resin composition. CN102174173A, 2011.
33. Kang, Y.H.; Kim, M.S.; Lee, E.J.; Ahn, S.H.; Hong, S.H. Manufacturing method of high purity phosphinate flame retardants with good coloration. KR2013075839A, 2013.
34. Kang, Y.H.; Kim, M.S.; Lee, E.J.; Ahn, S.H.; Hong, S.H. Manufacturing method of high purity phosphinate flame retardants with good coloration. WO2013100290A1, 2013.
35. Dai, S.; Xu, K.; Chen, X. Method for preparing phosphorus-containing bisphenol a phenolic resin. CN103724575A, 2014.
36. Fung, D.-R.; Liao, T.-C.; Chao, C.-C.; Chen, H.-S. Halogen-free, nonflammable and high glass transition temperature phenolic resin-based curing agent and process for producing the phenolic resin. US20140296452A1, 2014.
37. Fung, D.-R.; Liao, T.-C.; Chen, H.-S.; Chao, C.-C. Halogen-free flame-resisting phenolic resin curing agent and its preparing method. CN103554441A, 2014.
38. Hwang, G.C.; Jung, E.G.; Lee, S.M. Manufacturing method of flame retardant polymers with good adhesion. KR2014068362A, 2014.
39. Yan, L.; Shang, H.; Sang, X.; Li, T.; Zhang, Z. Preparation of polymeric phosphorus and silicon-containing flame retardants. CN103897104A, 2014.
40. Dai, L.; Lin, K.; Chen, G.; Wu, S.; Li, Z.; Zhu, J.; Xu, Y.; Zeng, B. Flame retardant with high content of nitrogen and phosphorus and its preparation method. CN105440308A, 2016.
41. Fang, Y.; Zhou, X.; Wu, Y.; Xing, Z. Dopo derivative flame retardant and its preparing method and application. CN105295300A, 2016.
42. Jiang, S.; Shi, X. Dopo-based flame retardant and preparation method thereof. CN106243385A, 2016.
43. Mu, B.; Guo, Y.; Cui, J.; Yang, B.; Guo, J.; Bao, X.; Zhang, X.; Zhou, Y.; Guo, H.; Hu, Q., et al. Manufacture method of phosphorus-containing flame-retardant poly(methyl methacrylate) resin. CN105384858A, 2016.
44. Mu, B.; Guo, Y.; Yang, B.; Cui, J.; Guo, J.; Bao, X.; Zhang, X.; Zhou, Y.; Guo, H.; Gao, B., et al. Method for preparing high-phosphorus content flame retardant. CN105254678A, 2016.
45. Xia, Y.; Cao, C.; Ren, F.; Wu, Z.; Chen, E.; Xu, F.; Song, Q.; Fang, Y. Halogen-free flame retardant thermoplastic elastomer material for electric wire/cable and preparation method thereof. CN105623180A, 2016.
46. Cao, H.; Wang, X. Phosphorus-containing linear phenolic resins for epoxy resin curing agents and preparation method thereof. CN106279586A, 2017.
47. Fang, Y.; Zhou, X.; Wu, Y.; Xing, Z. Dopo-modified cyclophosphazene flame retardant and preparation and application thereof. CN106380485A, 2017.
48. Xu, B. Reactive flame-retardant coating composition for cables comprising silane crosslinked polyolefin and dopo deriv. CN106397909A, 2017.
49. Chang, S.; Zhou, X.; Xing, Z.; Tu, T. Probing polarity of flame retardants and correlating with interaction between flame retardants and pet fiber. J. Colloid Interface Sci. 2017, 498, 343-350.

## Claims

1. A flame-retardant polymer master batch, **characterized in that** it comprises an admixture of 8 to 70 wt.% of a flame retardant consisting of 6-(hydroxymethyl)-dibenzo[c,e][1,2]oxaphosphinine 6-oxide, with the remainder essentially consisting of a base polymer selected from polyamide 6 and a polyamide-6-compatible polymer.

2. The master batch according to claim 1, wherein said admixture is 10 to 50 wt.%, particularly 10 to 40 wt.%, more particularly 15 to 30 wt.%.

3. The master batch according to claim 1 or 2, wherein said base polymer is polyamide 6.

4. The master batch according to claim 3, wherein said base polymer is polyamide 6 with a relative viscosity of at least about 2.7.

5. A method of producing a master batch according to one of the preceding claims, comprising the steps of supplying appropriate amounts of the base polymer in granular form and of said flame retardant in powder form to a compounding extruder followed by melt compounding at a temperature of 200 to 260°C and granulation to form said master batch in granular form.

6. A method of producing a plastic product with flame retardant properties, comprising the steps of either
(a) melt processing a master batch according to one of claims 1 to 4, or
(b) melt processing appropriate amounts of base polymer in granular form and of flame retardant in granular form.

7. The method according to claim 6, wherein said melt processing is carried out according to step (a) with a granular mixture of said master batch and of a further polymer that is compatible with said base polymer.

8. The method according to claim 6 or 7, wherein said product is a film, membrane or solid body.

9. The method according to claim 6 or 7, wherein said product is a melt spun fiber.

10. The method according to claim 9, wherein said melt spun fiber comprises a core section and a sheath section, said sheath section being formed of said base polymer and an admixture of 10 to 40 wt.%, particularly 15 to 30 wt.% of said flame retardant, said core section being formed of a further polymer compatible with said base polymer.

11. The method according to claim 10, wherein said base polymer is polyamide 6 with a relative viscosity of at least about 2.7 and wherein said further polymer is polyamide 6 with a relative viscosity of about 2.4.

12. The method according to one of claims 9 to 11, further comprising the step of making a textile from said melt spun fiber.

13. A product with flame retardant properties obtainable with a method according to one of claims 6 to 12, comprising at least one region formed of said base polymer containing an admixture of 8 to 40 wt.%, particularly 15 to 30 wt.%, of said flame retardant.

14. The product according to claim 13, which is a film, membrane or solid body.

15. The product according to claim 13, which is a textile and has a limiting oxygen index of at least 25%, preferably at least 30%.
